# EUROPEAN PATENT APPLICATION

(11) **EP 4 696 650 A1**
(43) Date of publication of application: **18.02.2026**
(21) Application number: 23933196.0
(22) Date of filing: 29.12.2023
(51) Int. Cl.: C01B 32/05, C01B 33/02, H01M 4/36, H01M 4/38, H01M 4/02

(54) **CARBON-SILICON/CARBON COMPOSITE AND METHOD FOR PRODUCING SAME**

(30) Priority: 14.04.2023 KR 20230049200
(71) Applicant: Pukyong National University Industry - University Cooperation Foundation, Nam-gu Busan 48513 (KR)
(72) Inventor: KIM, Do Heung, Seoul 04541 (KR); JEON, Hyo Jin, Seoul 04541 (KR); KIM, Eui Duk, Seoul 04541 (KR); IM, Jangbin, Daejeon 34128 (KR); CHAE, Sujong, Busan 48445 (KR); LEE, Jinsu, Busan 48549 (KR); PARK, Seongsu, Changwon-si, Gyeongsangnam-do 51793 (KR)
(74) Representative: Berggren Oy
(86) International application number: PCT/KR2023/022024
(87) International publication number: WO 2024/214910

(57) **Abstract**

The present invention pertains to: a carbon-silicon/carbon composite in which a silicon/carbon composite matrix is formed on the surface and inside the pores of a porous carbon support having controlled pore properties; and a method for producing same. When the carbon-silicon/carbon composite according to an embodiment of the present invention is used as a negative electrode active material, electrical conductivity is excellent, and stress caused by the volumetric expansion of silicon can be alleviated.

## Description

### TECHNICAL FIELD

The present invention relates to a carbon-silicon/carbon composite, and more particularly, to a carbon-silicon/carbon composite and a method for producing the same.

### BACKGROUND

With the recent advancement of the information and communication industry, the demand for electronic devices has surged, and as the electric vehicle market continues to grow, the demand for batteries used in these electronic devices and electric vehicles has also significantly increased.

Secondary batteries, such as lithium secondary batteries containing a liquid electrolyte and all-solid-state batteries, are most widely used for such applications because they have high energy density and exhibit low self-discharge when not in use. Secondary batteries are generally composed of a cathode, an anode, and an electrolyte (either liquid or solid), and carbon-based materials such as graphite are widely used as negative electrode active materials in secondary batteries.

Recently, efforts have been made to use silicon-based negative electrode active materials in order to improve the capacity of secondary batteries. Silicon is attracting attention as a next-generation battery negative electrode active material to replace graphite due to its theoretically high energy density. However, during charge and discharge, it reacts with lithium and undergoes a volume expansion of as much as about 300%, leading to severe degradation in mechanical stability, such as the fracturing of the silicon negative electrode active material as the charge-discharge cycles progress.

In order to address these problems, a composite obtained by forming a silicon layer on a porous carbon support having excellent electrical conductivity has been proposed. However, conventional carbon supports are mainly provided with micropores, and thus when performing a subsequent process such as chemical vapor deposition (CVD), deposition does not sufficiently reach the pores in the interior. In addition, the crystals of silicon formed on the carbon support are large, which fails to adequately mitigate fracturing caused by volumetric expansion.

### DISCLOSURE

### TECHNICAL PROBLEM

The present invention is directed to providing a carbon-silicon/carbon composite in which a silicon/carbon composite matrix is formed in the pores and/or on the surface of a porous carbon support having controlled pore characteristics.

The present invent ion is also directed to providing a method for producing the carbon-silicon/carbon composite.

The present invention is also directed to providing a negative electrode active material comprising the carbon-silicon/carbon composite.

### TECHNICAL SOLUTION

The present invention provides a carbon-silicon/carbon composite, including a porous carbon support; and a silicon/carbon composite matrix disposed on the surface and inside the pores of the porous carbon support.

According to an embodiment of the present invention, the porous carbon support may have a mesopore volume ratio of 10 to 80% based on the total pore volume, the mesopores having a pore size of 2 to 50 nm.

In addition, the porous carbon support may have a BET specific surface area of 300 to 3,000 m² /g, a tap density of 0.05 to 0.5 g/mL, and an average particle size of 1 to 20 µm.

The silicon/carbon composite matrix may contain silicon and carbon in a weight ratio of 1:2 to 1:0.1.

In addition, the silicon/carbon composite matrix may contain 10 to 90 wt% of the total weight of the carbon-silicon/carbon composite.

In addition, the carbon-silicon/carbon composite may further include a carbon layer formed on the silicon/carbon composite matrix.

In addition, the present invention provides a method for producing a carbon-silicon/carbon composite, the method including (1) forming silicon on the surface and inside the pores of a porous carbon support to obtain a carbon-silicon composite; and (2) heat-treating the carbon-silicon composite.

According to an embodiment of the present invention, the heat-treating may be performed by heat-treating the carbon-silicon composite at a temperature of 800 to 1,000° C to convert a portion of the Si-Si bonds of the silicon into Si-C bonds.

In addition, the heat-treating may be performed by forming a carbon layer on the carbon-silicon composite at a temperature of 800 to 1,000° C while converting a portion of the Si-Si bonds of the silicon into Si-C bonds.

In addition, the present invention provides a negative electrode active material including the above-described carbon-silicon/carbon composite, and a carbon-based anode material.

In addition, the present invention provides an all-solid-state battery including an SEI (Solid Electrolyte Interphase) layer including the above-described carbon-silicon/carbon composite.

### ADVANTAGEOUS EFFECT

The carbon-silicon/carbon composite according to an embodiment of the present invention, in which a silicon/carbon composite matrix is formed in the pores and/or on the surface of a porous carbon support having a high ratio of mesopores among the total pores, exhibits excellent electrical conductivity, alleviates stress caused by the volumetric expansion of silicon, and provides excellent capacity retention when used as a negative electrode active material.

In addition, the production method according to an embodiment of the present invention can readily produce a carbon-silicon/carbon composite having the above characteristics.

### BRIEF DESCRIPTION OF THE DRAWINGS

FIG. 1 shows the results of X-ray diffraction analysis of composite particles of a Reference Example, Examples 1 and 2, and Comparative Example 1.
FIG. 2 shows the results of X-ray diffraction analysis by heat treatment temperature to confirm the conversion from Si-Si bonds to Si-C bonds in a carbon-silicon composite.
FIGS. 3 and 4 show the results of electrochemical analysis of batteries manufactured using the composites of the Reference Example, Examples 1 and 2, and Comparative Example 1.

### BEST MODES FOR CARRYING OUT THE INVENTION

The present invention is not limited to the embodiments disclosed below, and may be modified in various forms as long as the spirit of the invention is not altered.

In the present specification, the terms "comprise" or "include" mean that other components may be further included unless otherwise specified.

Unless otherwise specified, all numerical values and expressions indicating the amounts of components, reaction conditions, and the like described in the present specification are to be understood as being modified by the term "about" in all instances.

Hereinafter, the present invention will be described in more detail.

### Carbon-Silicon/Carbon Composite

According to one embodiment of the present invention, there is provided a carbon-silicon/carbon composite comprising a porous carbon support and a silicon/carbon composite matrix disposed on the surface and inside the pores of the porous carbon support.

Hereinafter, each component of the carbon-silicon/carbon composite according to one embodiment of the present invention will be described.

### Porous Carbon Support

The carbon-silicon/carbon composite according to an embodiment of the present invention includes a porous carbon support.

The porous carbon support may have a volume ratio of mesopores having a pore size of 2 to 50 nm of 10 to 80% based on the total pore volume, preferably 30 to 60%, and more preferably 40 to 50%. If the volume ratio of mesopores of the porous carbon support is less than 10%, an excessive amount of micropores may cause the silicon source to be relatively heavily deposited on the exterior, and if the volume ratio of mesopores of the porous carbon support exceeds 80%, the hardness of the particles may be insufficient, and thus, when used to manufacture an electrode, the structure of the electrode may collapse.

In addition, the porous carbon support may have an average particle size of 1 to 20 µm. Preferably, the porous carbon support may have an averageparticle size of 3 to 20 µm, and more preferably 3 to 10 µm. If the average particle size of the porous carbon support is less than 1 µm, the silicon source may not sufficiently penetrate into the pores and may be excessively deposited only on the exterior of the particles, and if the average particle size of the porous carbon support exceeds 20 µm, it may be difficult for the silicon source to be sufficiently deposited into the pores.

In addition, the porous carbon support may have a BET specific surface area of 300 to 3,000 m² /g. Preferably, the porous carbon support may have a BET specific surface area of 300 to 1,500 m² /g, and more preferably 500 to 1,500 m² /g. If the BET specific surface area of the porous carbon support is less than 300 m² /g, there may be too many macropores, resulting in a shortage of effective pores, and if the BET specific surface area of the porous carbon support exceeds 3,000 m² /g, there may be an excessive number of micropores, causing the silicon source to be heavily deposited on the exterior of the particles.

In addition, the porous carbon support may have a tap density of 0.05 to 0.5 g/mL. Preferably, the porous carbon support may have a tap density of 0.05 to 0.3 g/mL, and more preferably 0.1 to 0.3 g/mL. If the tap density of the porous carbon support is less than 0.05 g/mL, process control during deposition of the silicon source may be difficult, resulting in reduced yield, and if the tap density of the porous carbon support exceeds 0.5 g/mL, uniform coating during deposition of the silicon source may be difficult to achieve.

By including a porous carbon support having the above characteristics, the carbon-silicon/carbon composite according to an embodiment of the present invention may exhibit excellent electrical conductivity and alleviate stress caused by the volumetric expansion of silicon when used as a negative electrode active material.

### Silicon/Carbon Composite Matrix

The carbon-silicon/carbon composite according to an embodiment of the present invention includes a silicon/carbon composite matrix disposed on the surface and inside the pores of the porous carbon support.

In the present invention, the silicon/carbon composite matrix may refer to a continuous phase in which a silicon portion formed by Si-Si bonds and a silicon carbide portion formed by Si-C bonds are mixed.

In a specific embodiment of the present invention, as described below, after forming silicon on the porous carbon support to obtain a carbon-silicon composite, the composite may be heat-treated at a temperature of 800 to 1,000° C to convert a portion of the Si-Si bonds of the silicon into Si-C bonds, thereby obtaining the silicon/carbon composite matrix.

In another specific embodiment of the present invention, as described below, after forming silicon on the porous carbon support to obtain a carbon-silicon composite, a silicon/carbon composite matrix may be obtained by forming a carbon layer on the carbon-silicon composite at a temperature of 800 to 1,000° C while converting a portion of the Si-Si bonds of the silicon into Si-C bonds.

In a specific embodiment of the present invention, the silicon/carbon composite matrix may include crystalline silicon particles. In this case, the size of the silicon crystals may be at the nanoscale. Specifically, the average size of the silicon crystals in the silicon/carbon composite matrix may be 10 nm or less. Preferably, the average size of the silicon crystals in the silicon/carbon composite matrix may be 8 nm or less, 5 nm or less, 3 nm or less, or 1 nm or less.

When the average size of the silicon crystals in the silicon/carbon composite matrix falls within the above range, the magnitude of stress caused by the volumetric expansion of silicon may be reduced, thereby improving the lifetime characteristics of the negative electrode active material.

Meanwhile, the silicon/carbon composite matrix may contain silicon and carbon in a weight ratio of 1:2 to 1:0.1, and preferably in a weight ratio of 1:1.9 to 1:0.15. If the weight ratio of silicon to carbon is less than 1:2 (silicon less than 1, carbon greater than 2), problems caused by the volumetric expansion of silicon during charge and discharge may not be resolved, leading to structural damage of the anode material and deterioration of cycle characteristics. On the other hand, if the weight ratio exceeds 1:0.1 (silicon greater than 1, carbon less than 0.1), the electrical capacity may be reduced.

Meanwhile, the silicon/carbon composite matrix may account for 10 to 90 wt% of the total weight of the carbon-silicon/carbon composite, and preferably 15 to 85 wt%. If the silicon/carbon composite matrix accounts for less than 10 wt% of the total weight of the carbon-silicon/carbon composite, the electrical capacity may be reduced, and if it exceeds 90 wt%, problems caused by the volumetric expansion of silicon during charge and discharge may not be resolved, leading to structural damage of the anode material and deterioration of cycle characteristics.

### Carbon Layer

According to another embodiment of the present invention, the carbon-silicon/carbon composite may further include a carbon layer formed on the silicon/carbon composite matrix.

When the carbon-silicon/carbon composite further includes a carbon layer, even higher electrical conductivity can be ensured, and the specific surface area can be appropriately controlled. As a result, when the composite is used as a negative electrode active material of a secondary battery, the capacity retention of the secondary battery can be further improved.

The electrical conductivity of a negative electrode active material is an important factor in facilitating electron transfer during electrochemical reactions. If the content of carbon included in the carbon-silicon/carbon composite used as the negative electrode active material is insufficient, the electrical conductivity of the negative electrode active material may not be sufficient. Accordingly, by further including a carbon layer on the silicon/carbon composite matrix, the charge/discharge capacity, initial charge efficiency, and capacity retention of the secondary battery can be improved, higher electrical conductivity can be provided, side reactions with the electrolyte can be suppressed, and the performance of the secondary battery can be further enhanced.

In this case, the thickness of the carbon layer may be 1 nm to 1 µm, preferably 3 to 150 nm, and more preferably 5 to 100 nm. When the thickness of the carbon layer is within this range, the effect of improving conductivity can be achieved while suppressing a reduction in the capacity of the secondary battery.

The carbon layer may include at least one selected from graphene, carbon nanotubes, carbon nanofibers, and graphite. Specifically, the carbon layer may include graphene and may further include graphite, but is not particularly limited thereto.

### Method for Producing a Carbon-Silicon/Carbon Composite

According to one embodiment of the present invention, the carbon-silicon/carbon composite is produced by a method including (1) forming silicon on the surface and inside the pores of a porous carbon support to obtain a carbon-silicon composite; and (2) heat-treating the carbon-silicon composite.

Hereinafter, each step of the method for producing a carbon-silicon/carbon composite according to an embodiment of the present invention will be described.

### Step (1)

In step (1), silicon is formed on the surface and inside the pores of the porous carbon support to produce a carbon-silicon composite.

In a specific embodiment of the present invention, the step of forming silicon on the surface and inside the pores of the porous carbon support may be carried out using apparatuses (for example, a rotary kiln) and methods (for example, chemical vapor deposition (CVD)) known in the art. Specifically, a silicon source may be supplied to the porous carbon support, and CVD may be performed to form silicon on the surface and inside the pores of the porous carbon support.

In a specific embodiment of the present invention, the silicon source may include at least one selected from silane (SiH₄), dichlorosilane (SiH₂Cl₂), silicon tetrafluoride (SiF₄), silicon tetrachloride (SiCl₄), methylsilane (CH₃SiH₃), and disilane (Si₂H₆), but is not particularly limited thereto.

The CVD of the silicon source may be performed at a temperature of 300 to 700° C. For example, the CVD of the silicon source may be performed at a temperature of 400 to 600° C, 400 to 500° C, or 400 to 450° C, but is not particularly limited to these ranges. In addition, the CVD may be carried out at atmospheric pressure, or under a low vacuum of about 10 Torr if necessary. Furthermore, the deposition may be carried out, for example, in an atmosphere of silane (SiH₄) gas at a flow rate of 50 sccm to 500 sccm.

### Step (2)

In step (2), the carbon-silicon composite is subjected to a heat treatment.

According to one embodiment of the present invention, the heat treatment may be performed by heat-treating the carbon-silicon composite at a temperature of 800 to 1,000° C to convert a portion of the Si-Si bonds of the silicon into Si-C bonds.

In this case, the heat treatment may be performed at a temperature of 800 to 1,000° C, preferably at 800 to 950° C, more preferably at 850 to 950° C, and still more preferably at 900 to 950° C. When the carbon-silicon composite is heat-treated at such a temperature, a portion of the Si-Si bonds in the silicon layer may be converted into Si-C bonds, thereby forming the silicon/carbon composite matrix.

The heat treatment time may be appropriately adjusted depending on the heat treatment temperature, the pressure during the heat treatment, and the desired carbon-to-silicon content ratio. For example, the reaction time may be 10 to 120 minutes, specifically 30 to 90 minutes, and more specifically 30 to 50 minutes, but is not particularly limited to these ranges.

In a specific embodiment of the present invention, the heat treatment of the carbon-silicon composite may be carried out in an inert gas atmosphere. In a preferred embodiment of the present invention, the heat treatment of the carbon-silicon composite may be performed under a nitrogen or argon atmosphere, but is not particularly limited thereto.

Through the above heat treatment of the carbon-silicon composite, a carbon-silicon/carbon composite having a silicon/carbon composite matrix may be produced.

In addition, according to another embodiment of the present invention, the heat treatment may be performed at a temperature of 800 to 1,000° C while forming a carbon layer on the carbon-silicon composite and converting a portion of the Si-Si bonds of the silicon into Si-C bonds.

The step of forming a carbon layer on the particle surface of the carbon-silicon composite may be carried out using apparatuses and methods known in the art, such as chemical pyrolysis deposition, but is not particularly limited thereto.

In this case, the step of forming the carbon layer may be performed by heat-treating the carbon-silicon composite at a temperature of 800 to 1,000° C in the presence of a gaseous carbon source. Preferably, the heat treatment of the carbon-silicon composite in the presence of the gaseous carbon source may be performed at a temperature of 800 to 950° C, and more preferably at 850 to 950° C. When the carbon-silicon composite is heat-treated at such a temperature in the presence of the gaseous carbon source, a portion of the Si-Si bonds of the silicon layer may be converted into Si-C bonds, thereby forming the silicon/carbon composite matrix.

In a preferred embodiment of the present invention, the carbon source may include at least one selected from the group consisting of methane, ethane, propane, butane, methanol, ethanol, propanol, propanediol, butanediol, ethylene, propylene, butylene, butadiene, cyclopentene, acetylene, benzene, toluene, xylene, ethylbenzene, naphthalene, anthracene, and dibutylhydroxytoluene, but is not particularly limited thereto.

When forming the carbon layer on the particle surface of the carbon-silicon composite, the process may be carried out in the presence of at least one inert gas selected from the group consisting of hydrogen, nitrogen, helium, and argon, in addition to the above carbon source.

The reaction time (heat treatment time) for forming the carbon layer may be appropriately adjusted depending on the heat treatment temperature, the pressure during the heat treatment, the composition of the gas mixture, and the desired amount of carbon coating. For example, the reaction time may be 10 to 120 minutes, specifically 20 to 90 minutes, and more specifically 30 to 60 minutes, but is not particularly limited to these ranges.

In a specific embodiment of the present invention, when forming a carbon layer on the particle surface of the carbon-silicon composite, the process may be carried out by mixing a solution in which the carbon source is dispersed in a solvent, as needed, with the carbon-silicon composite, followed by drying and heat-treating at a temperature of 800 to 1,000° C.

In a preferred embodiment of the present invention, the carbon source may be selected from the group consisting of pitch, hydrocarbon-based materials, and petroleum-based materials. More specifically, the pitch may be petroleum-based pitch, coal-based pitch, or a mixture thereof; the hydrocarbon-based material may be furfuryl alcohol or a phenolic resin; and the petroleum-based material may be pyrolysis fuel oil (PFO), naphtha cracking bottom oil (NCB), ethylene cracker bottom oil (EBO), vacuum residue (VR), de-asphalted oil (DAO), atmospheric residue (AR), fluid catalytic cracking decant oil (FCC-DO), residue fluid catalytic cracking decant oil (RFCC-DO), or heavy aromatic oil. The solvent may be tetrahydrofuran (THF) or an alcohol.

By performing the heat treatment while forming the carbon layer, a carbon-silicon/carbon composite including a carbon layer on the silicon/carbon composite matrix may be produced.

### Preliminary Step

Meanwhile, according to one embodiment of the present invention, the method for producing the carbon-silicon/carbon composite may further include, prior to step (1), the steps of: (a) synthesizing pitch by pyrolyzing and polycondensing a petroleum-based raw material; (b) solidifying and pulverizing the pitch to obtain pitch pellets or pitch powder; (c) stabilizing the pitch; (d) carbonizing the stabilized pitch to obtain a carbonized body; and (e) activating the carbonized body to obtain a porous carbon support.

In step (a), pitch may be synthesized by pyrolyzing and polycondensing a petroleum-based raw material.

In a specific embodiment of the present invention, the petroleum-based raw material may include at least one selected from the group consisting of pyrolysis fuel oil (PFO), naphtha cracking bottom oil (NCB), ethylene cracker bottom oil (EBO), vacuum residue (VR), de-asphalted oil (DAO), atmospheric residue (AR), fluid catalytic cracking decant oil (RFCC-DO), residue fluid catalytic cracking decant oil (RFCC-DO), and heavy aromatic oil. In a preferred embodiment of the present invention, the petroleum-based raw material may include pyrolysis fuel oil.

In a specific embodiment of the present invention, the petroleum-based raw material may contain 10 to 90 wt% of aromatic compounds. Preferably, the petroleum-based raw material may contain 20 to 80 wt% of aromatic compounds, and more preferably 30 to 70 wt% of aromatic compounds. When the content of aromatic compounds in the petroleum-based raw material falls within the above range, a porous carbon support having controlled pore characteristics can be obtained even if the solid pitch pellets described below are subjected to stabilization, carbonization, and activation without being separately pulverized.

In a specific embodiment of the present invention, the aromatic compound may be a compound having 1 to 4 aromatic rings. Specifically, the aromatic compound may include at least one selected from the group consisting of substituted or unsubstituted benzene, naphthalene, phenanthrene, indene, biphenyl, anthracene, tetralin, and fluorene. In this case, a porous carbon support having controlled pore characteristics can be obtained even if the solid pitch pellets described below are subjected to stabilization, carbonization, and activation without being separately pulverized.

In a specific embodiment of the present invention, the pyrolysis and polycondensation of the petroleum-based raw material may be carried out at a temperature of 350 to 500° C. In a preferred embodiment of the present invent ion, the pyrolysis and polycondensation of the petroleum-based raw material may be carried out at a temperature of 400 to 500° C. In a more preferred embodiment of the present invention, the pyrolysis and polycondensation of the petroleum-based raw mater ial may be carried out at a temperature of 430 to 470° C. When the pyrolysis and polycondensation temperature of the petroleum-based raw material is 350 to 500° C, pitch containing a relatively large amount of low molecular weight components can be produced, and during the activation process of step (e) described below, the relatively low molecular weight components are vaporized first, thereby sufficiently forming mesopores in the carbon support. If the pyrolysis and polycondensation temperature of the petroleum-based raw material is lower than 350° C, it becomes difficult to produce pitch that is solid at room temperature, and if the temperature exceeds 500° C, a relatively large amount of high molecular weight components are included in the pitch, making it difficult to produce a carbon support having mesopores.

In a specific embodiment of the present invention, the pyrolysis and polycondensation of the petroleum-based raw material may be carried out in an atmosphere of an oxidizing gas, an inert gas, or a mixed gas thereof. In a preferred embodiment of the present invention, the oxidizing gas may be oxygen, ozone, or a combination thereof; the inert gas may be nitrogen, helium, neon, argon, or a combination thereof; and the mixed gas may be air, but is not particularly limited thereto.

When an oxidizing gas is used during the pyrolysis and polycondensation of the petroleum-based raw material, pitch having a high softening point can be produced, but it is difficult to perform the pyrolysis and polycondensation at high temperatures. When an inert gas is used during the pyrolysis and polycondensation of the petroleum-based raw material, the pyrolysis and polycondensation can be performed at high temperatures, but it is difficult to produce pitch having a relatively high softening point. When a mixed gas of an oxidizing gas and an inert gas is used during the pyrolysis and polycondensation of the petroleum-based raw material, the pyrolysis and polycondensation can be performed at a relatively high temperature, and pitch having a relatively high softening point can be produced.

In a specific embodiment of the present invention, the gas may be supplied at a flow rate of 10 to 800 mL/min during the pyrolysis and polycondensation of the petroleum-based raw material. In a preferred embodiment of the present invention, the gas may be supplied at a flow rate of 100 to 500 mL/min during the pyrolysis and polycondensation of the petroleum-based raw material. If the flow rate of the gas is less than 10 mL/min, the yield of pitch may increase, but the amount of low molecular weight components becomes excessive, which is disadvantageous for subsequent processes (for example, stabilization). If the flow rate of the gas exceeds 800 mL/min, the yield of pitch may decrease.

In a specific embodiment of the present invention, the pyrolysis and polycondensation of the petroleum-based raw material may be carried out for 1 to 10 hours. In a preferred embodiment of the present invention, the pyrolysis and polycondensation of the petroleum-based raw material may be carried out for 2 to 8 hours. In a more preferred embodiment of the present invention, the pyrolysis and polycondensation of the petroleum-based raw material may be carried out for 2 to 7 hours. If the pyrolysis and polycondensation time of the petroleum-based raw material is less than 1 hour, it is difficult to produce pitch having a high softening point, and if the pyrolysis and polycondensation time of the petroleum-based raw material exceeds 10 hours, an excessive amount of quinoline-insoluble components may be generated.

In a specific embodiment of the present invention, the pyrolysis and polycondensation of the petroleum-based raw material may be carried out under stirring. The stirring conditions of the petroleum-based raw material are not particularly limited, and for example, a stirrer rotating at 10 to 500 rpm may be used.

In a specific embodiment of the present invention, the pitch synthesized in step (a) may have a softening point of 200 to 350° C. In a preferred embodiment of the present invention, the pitch may have a softening point of 200 to 330° C. In a more preferred embodiment of the present invention, the pitch may have a softening point of 200 to 300° C. Since the pitch produced according to the present invention has a high softening point, when it is used as a precursor for producing a carbon support, the stabilization process can be facilitated, and a high yield can be obtained after carbonization and activation.

In a specific embodiment of the present invention, the yield of pitch synthesized in step (a) may be 10 to 50 wt%. In a preferred embodiment of the present invention, the yield of pitch may be 10 to 40 wt%. In a more preferred embodiment of the present invention, the yield of pitch may be 20 to 30 wt%.

In a specific embodiment of the present invention, a pretreatment step of the petroleum-based raw material may be performed prior to step (a). By removing low-boiling-point components contained in the petroleum-based raw material through the pretreatment step, pitch having a higher softening point can be produced.

In a specific embodiment of the present invention, the pretreatment step may be carried out at a temperature equal to or lower than the pyrolysis and polycondensation temperature of the petroleum-based raw material in step (a), but is not particularly limited thereto. Specifically, the pretreatment step may be performed at 250 to 450° C, preferably at 250 to 400° C, and more preferably at 300 to 400° C.

In a specific embodiment of the present invention, the pretreatment step may be carried out for a time equal to or shorter than the pyrolysis and polycondensation time of the petroleum-based raw material in step (a), but is not particularly limited thereto. Specifically, the pretreatment step may be performed for 1 to 8 hours, preferably for 1 to 6 hours, and more preferably for 1 to 5 hours.

In addition, in step (b), the pitch may be solidified and pulverized to obtain pitch pellets or pitch powder.

The liquid pitch obtained in step (a) may be solidified by, for example, extrusion and cooling, and then pelletized to a desired size to obtain solid pitch pellets. The process of extruding, cooling, and pelletizing the liquid pitch to obtain solid pitch pellets may be carried out using a commercialized apparatus. For example, the process may be carried out using a double-belt cooler & flaker manufactured by IPCO, but is not particularly limited thereto.

The pitch pellets obtained in step (b) may have an average particle size of 1 to 30 mm, preferably 5 to 25 mm. When the average particle size of the pitch pellets falls within this range, a porous carbon support can be produced through the stabilization, carbonization, and activation described below without separately pulverizing the pitch pellets.

However, if necessary, the pitch pellets obtained in step (b) may be further crushed or pulverized and classified. Through crushing or pulverization, the pitch pellets may be further micronized, and through classification, the particle size distribution of the pitch pellets may be made uniform. Here, the classification may be performed by dry classification, wet classification, or classification using a sieve. By the crushing or pulverization and classification treatment, pitch powder having an average particle size of 50 to 500 µm may be obtained.

And in step (c), a step of stabilizing the pitch may be performed.

First, the pitch obtained in step (b) is subjected to primary oxidation to stabilize the carbon structure of the pitch.

In a specific embodiment of the present invention, the stabilization of the pitch may be carried out in an oxidizing gas atmosphere. In a preferred embodiment of the present invention, the stabilization of the pitch may be carried out in an air atmosphere, but is not particularly limited thereto.

In a specific embodiment of the present invention, the stabilization of the pitch may be carried out at a temperature of 100 to 500° C, preferably 150 to 300° C. When the stabilization of the pitch is carried out at this temperature, the carbon structure in the pitch changes from thermoplastic to thermosetting, so that its structure can be stably maintained during the subsequent carbonization process. In this case, the heating rate may be 2 to 10° C/min. If the heating rate is too slow, productivity may be poor, whereas if the heating rate is excessively fast, it may be difficult to achieve uniform stabilization treatment.

In a specific embodiment of the present invention, the stabilization of the pitch may be carried out at a pressure of 0.1 to 10 bar, preferably 0.5 to 5 bar. When the stabilization of the pitch is carried out at this pressure, the structure of the carbon inside the pitch can be sufficiently stabilized.

In a specific embodiment of the present invention, the stabilization of the pitch may be carried out under a flow rate of 0.1 to 500 mL/min of an oxidizing gas, preferably air, and more preferably 1 to 300 mL/min. When the stabilization of the pitch is carried out under this oxidizing gas flow rate condition, the structure of the carbon inside the pitch can be sufficiently stabilized.

In a specific embodiment of the present invention, the stabilization of the pitch may be carried out for 1 to 10 hours, preferably for 2 to 8 hours. When the stabilization of the pitch is carried out for this period of time, the structure of the carbon inside the pitch can be sufficiently stabilized.

And in step (d), the stabilized pitch is carbonized to obtain a carbonized body. Through the carbonization of the pitch, other functional groups contained in the pitch are removed, and a carbonized body composed substantially of pure carbon can be obtained.

In a specific embodiment of the present invention, the carbonization of the pitch may be carried out in an inert gas atmosphere. In a preferred embodiment of the present invention, the carbonization of the pitch may be performed under a nitrogen or argon atmosphere, but is not particularly limited thereto.

In a specific embodiment of the present invention, the carbonization of the pitch may be carried out at a temperature of more than 700° C and not more than 1,000° C, preferably at 800 to 900° C. If the carbonization temperature of the pitch is lower than this range, carbonization may not be sufficiently achieved, and if the carbonization temperature of the pitch is higher than this range, the carbonization yield may decrease.

In a specific embodiment of the present invention, the carbonization of the pitch may be carried out under a flow rate condition of 0.1 to 30 mL/min of an inert gas, preferably nitrogen, and more preferably 0.1 to 10 mL/min. When the carbonization of the pitch is carried out under this inert gas flow rate condition, the pitch can be sufficiently carbonized.

In a specific embodiment of the present invention, the carbonization of the pitch may be carried out for 0.5 to 5 hours, preferably for 1 to 3 hours. When the carbonization of the pitch is carried out for this period of time, the pitch can be sufficiently carbonized.

And in step (e), the carbonized body (carbonized pitch) is activated to obtain a porous carbon support. Through the activation of the carbonized body, pores are formed in the pitch pellets, thereby obtaining a porous carbon support.

In a specific embodiment of the present invention, the activation of the carbonized body may be carried out in an oxidizing gas atmosphere. In a preferred embodiment of the present invention, the activation of the carbonized body may be carried out in a steam atmosphere, but is not particularly limited thereto.

In a specific embodiment of the present invention, the activation of the carbonized body may be carried out at a temperature of more than 700° C and not more than 1,000° C, preferably at 800 to 900° C. When the activation of the carbonized body is carried out at this temperature, a porous carbon support in which micropores and mesopores are sufficiently formed can be obtained.

In a specific embodiment of the present invention, the activation of the carbonized body may be carried out at a pressure of 0.1 to 10 bar, preferably 0.1 to 5 bar. When the activation of the carbonized body is carried out at this pressure, a porous carbon support in which micropores and mesopores are sufficiently formed can be obtained.

In a specific embodiment of the present invention, the activation of the carbonized body may be carried out under a flow rate condition of 0.1 to 100 mL/min of an oxidizing gas, preferably steam, and more preferably 0.1 to 50 mL/min. When the activation of the carbonized body is carried out under this oxidizing gas flow rate condition, a porous carbon support in which micropores and mesopores are sufficiently formed can be obtained.

In a specific embodiment of the present invention, the activation of the carbonized body may be carried out for 0.5 to 5 hours, preferably for 1 to 3 hours. When the activation of the carbonized body is carried out for this period of time, a porous carbon support in which micropores and mesopores are sufficiently formed can be obtained.

In a specific embodiment of the present invention, the stabilization, carbonization, and activation of steps (c) to (e) may each be carried out in a furnace using microwaves. In a preferred embodiment of the present invention, the stabilization, carbonization, and activation of steps (c) to (e) may all be carried out in a furnace using microwaves. A furnace using microwaves is preferable because it can increase the temperature of the pitch itself without raising the external temperature of the pitch, but the present invention is not particularly limited thereto.

In a specific embodiment of the present invention, steps (c) to (e) may be continuously carried out in a single apparatus. In a preferred embodiment of the present invention, steps (c) to (e) may be continuously carried out in a single rotary kiln, but are not particularly limited thereto. By continuously carrying out steps (c) to (e) in a single apparatus, optimization of the process can be achieved.

In a specific embodiment of the present invention, the porous carbon support obtained in step (e) may be further crushed or pulverized and classified. Through crushing or pulverization, the porous carbon support may be further micronized, and through classification, the particle size distribution of the porous carbon support may be made uniform. Here, the classification may be performed by dry classification, wet classification, or classification using a sieve. By the crushing or pulverization and classification treatment, porous carbon support powder having an average particle size of 1 to 20 µm, a BET specific surface area of 300 to 3,000 m² /g, and a tap density of 0.05 to 0.5 g/mL can be obtained. In addition, the porous carbon support powder may have a mesopore volume ratio of 10 to 80% based on the total pore volume, wherein the mesopores have a pore size of 2 to 50 nm.

Meanwhile, when the porous carbon support is obtained by stabilizing, carbonizing, and activating the pitch without further pulverization in step (b), the carbon support may be pulverized (or further classified) to have an average particle size of 1 to 20 µm, but is not limited thereto.

In the method for producing a carbon-silicon/carbon composite according to an embodiment of the present invention, the obtained carbon-silicon/carbon composite may be crushed or pulverized and classified. Through crushing or pulverization, the porous carbon support may be further micronized, and through classification, the particle size distribution of the composite may be made uniform. Here, the classification may be performed by dry classification, wet classification, or classification using a sieve.

### Negative Electrode Active Material

According to another embodiment of the present invention, a negative electrode active material including a carbon-silicon/carbon composite is provided.

The negative electrode active material according to an embodiment of the present invention may include a carbon-silicon/carbon composite.

In addition, the negative electrode active material according to an embodiment of the present invention may further include a carbon-based anode material, specifically a graphite-based anode material, in addition to the carbon-silicon/carbon composite. For example, the negative electrode active material may be obtained by mixing the carbon-silicon/carbon composite according to an embodiment of the present invention with a carbon-based anode material, such as a graphite-based anode material.

Here, the carbon-based anode material may include at least one selected from the group consistingof natural graphite, artificial graphite, soft carbon, hard carbon, mesocarbon, carbon fibers, carbon nanotubes, pyrolytic carbons, cokes, calcined products of organic polymer compounds, and carbon black, but is not particularly limited thereto.

The content of the carbon-based anode material in the negative electrode active material according to an embodiment of the present invention may be 2 to 80 wt%, preferably 5 to 70 wt%, and more preferably 30 to 70 wt%, based on the total weight of the negative electrode active material.

The negative electrode active material according to an embodiment of the present invention can be effectively used for manufacturing secondary batteries, specifically anodes of secondary batteries and anodes of all-solid-state batteries.

### All-Solid-State Battery

According to another embodiment of the present invention, there is provided an all-solid-state battery including an SEI (Solid Electrolyte Interphase) film comprising the carbon-silicon/carbon composite.

The all-solid-state battery may be an all-solid-state battery including a cathode, an anode, and a solid electrolyte interposed between the cathode and the anode. The anode may include a negative electrode active material layer, and the negative electrode active material layer may include, on at least a portion of the negative electrode active material particles, an SEI (Solid Electrolyte Interphase) film comprising the above-described carbon-silicon/carbon composite.

Meanwhile, the negative electrode active material particles may be carbon-based anode materials, and in this case, the description may be the same as that provided above with respect to the negative electrode active material; therefore, a detailed description thereof will be omitted.

In addition, aside from the negative electrode active material particles and the SEI film of the all-solid-state battery, the anode configuration, cathode configuration, and solid electrolyte configuration may employ those of known all-solid-state batteries, and therefore the present invention is not particularly limited thereto.

### MODE FOR CARRYING OUT THE INVENTION

### Examples

The present invention will now be described in more detail with reference to the following examples. The following examples are provided merely for illustrative purposes and are not intended to limit the scope of the present invention.

### Examples 1 to 2 and Comparative Examples 1

300 g of petroleum residue oil (YNCC, HTC PFO (pyrolysis fuel oil)) was charged into a reactor equipped with a stirrer, and pyrolysis and polycondensation were carried out at 450° C for 3 hours while supplying nitrogen at a flow rate of 100 mL/min. At this time, the stirrer was rotated at a speed of 200 rpm to mix the reactants. The polymerized pitch was solidified and pelletized to obtain solid pitch pellets having an average particle size of 1 to 30 mm.

The solid pitch pellets obtained above were pulverized to produce pitch particles having an average particle size of 200 µm, and then charged into a rotary kiln having three zones, where stabilization, carbonization, and activation were sequentially carried out. The conditions for stabilization, carbonization, and activation are shown in Table 1 below.

The specific surface area of the carbon support was measured using a Belsorp mini II in accordance with ASTM D4820-93. The tap density of the carbon support was measured using a tap density analyzer (Electrolab, ETD-1020x) in accordance with ASTM B527. The average particle size of the carbon support was measured using a particle size analyzer (Horiba, laser particle analyzer, LA-960V2) in accordance with ASTM E112. The results are shown in Table 1.

**[Table 1]**

| Step | Condition | Reference Example |
|---|---|---|
| | Temperature (° C) | 300 |
| Stabilization | Time (hr) | 3 |
| | Atmosphere | air |
| Carbonization | Temperature (° C) | 900 |
| | Time (hr) | 1 |
| | Atmosphere | nitrogen |
| Activation | Temperature (° C) | 900 |
| | Time (hr) | 3 |
| | Steam Flow Rate (mL/min) | 200 |
| Support Properties | Average Particle Size (µm) | 200 |
| | Specific Surface Area (m² /g) | 705 |
| | Tap Density (g/mL) | 0.54 |

The porous carbon support of the Reference Example was pulverized using a grinder (Netzsch, air jet mill) to obtain a fine powder of the porous carbon support having an average particle size of 7 µm. Subsequently, 15 g of the fine powder of the porous carbon support was charged into a rotary kiln, and silane (SiH₄) gas was introduced to form a silicon layer on the porous carbon support. The conditions for forming the silicon layer and the properties of the carbon support after the formation of the silicon layer are shown in Table 2 below.

**[Table 2]**

| Step | Condition | Reference Example |
|---|---|---|
| Silicon Layer Formation Conditions | Batch (g) | 15 |
| | Pressure | atmospheric pressure |
| | Temperature (° C) | 475 |
| | Time (hr) | 120 |
| Properties of Carbon-Silicon Composite After Silicon Layer Formation | Average Particle Size (µm) | 8.9 |
| | Specific Surface Area (m² /g) | 10.4 |
| | Tap Density (g/mL) | 0.6 |

The carbon-silicon composite obtained above was charged into a rotary kiln and heat-treated at 900° C for 30 minutes in an argon atmosphere (Example 1). In addition, the same carbon-silicon composite was charged into a rotary kiln and heat-treated for 30 minutes in the presence of ethylene at 900° C (Example 2) and 700° C (Comparative Example 1) to form a carbon layer.

### Test Example

### X-Ray Diffraction Analysis

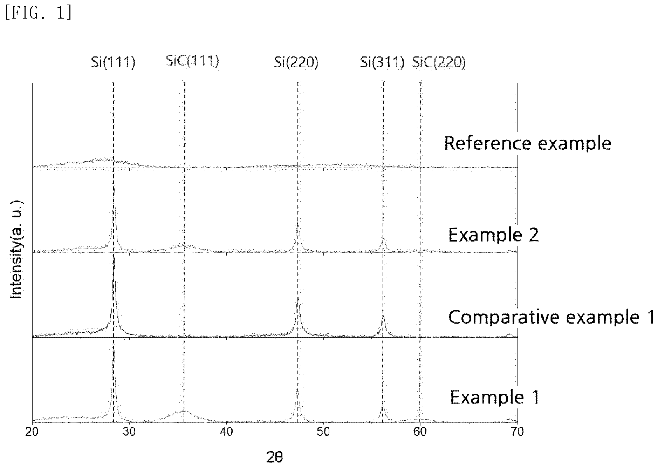

X-ray diffraction analysis was performed under the conditions below on the part icles of the Reference Example, Examples 1 and 2, and Comparative Example 1, and the results are shown in FIG. 1.
- Equipment: D-MAX 2200 (RIGAKU)
- Angle: 20-70°
- Sampling Width (step size): 0.01
- X-Ray: 40 kV/30 mA
- Divergence Slit (DivSlit): 1/2 deg.
- Divergence Height Limiting Slit (DivH.L.Slit): 10 mm
- Scattering Slit (SctSlit): 1/2 deg.
- Receiving Slit (RecSlit): 0.15 mm

As confirmed from FIG. 1, no Si-C bonds were formed in the carbon-silicon composite of the Reference Example and the carbon-silicon-carbon composite of Comparative Example 1. In contrast, it was confirmed that Si-C bonds were formed in the carbon-silicon/carbon composite of Example 1 and the carbon-silicon/carbon-carbon composite of Example 2.

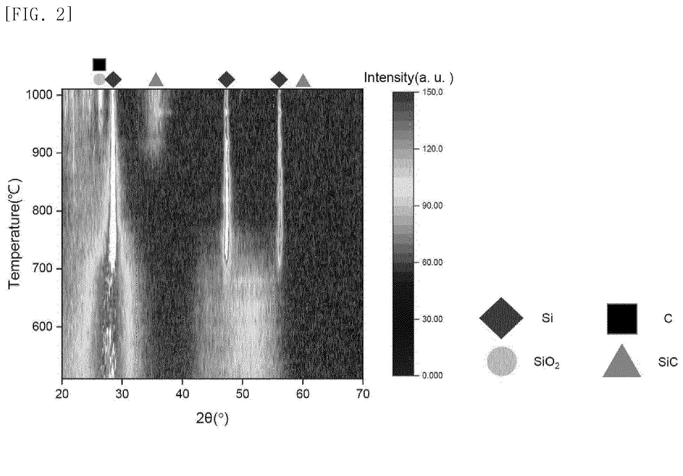

In addition, as confirmed from FIG. 2, the observation of an SiC peak at temperatures of 850° C or higher explains why no SiC peak was observed in Comparative Example 1, in which the heat treatment temperature was 700° C, as shown in FIG. 1, and also explains the observation of SiC peaks in Examples 1 and 2, in which the heat treatment temperature was 900° C, as shown in FIG. 1.

### (2) Electrochemical Evaluation

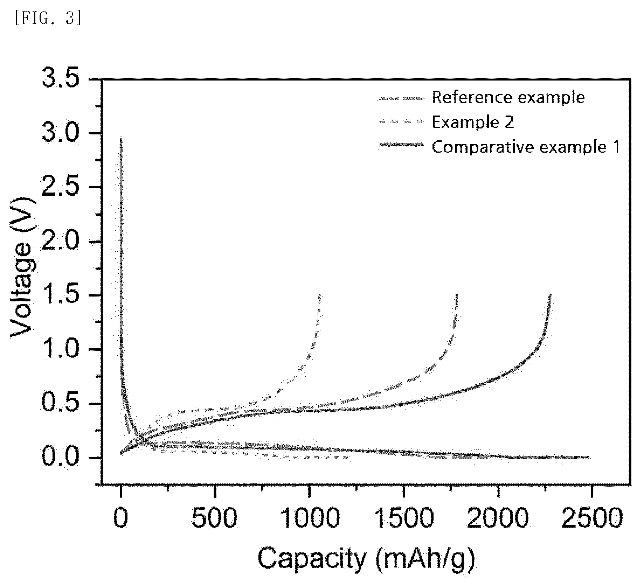

Half coin cells were fabricated using the composites of the Reference Example, Example 2, and Comparative Example 1, respectively, and electrochemical evaluation was performed. The fabrication conditions of the half coin cells are shown in Table 3, and the evaluation results are shown in Tables 4-5 and FIGS. 3-4. In Table 3, AM, CM, and BM denote the active material (porous carbon support deposited with silane), the conductive material (Super P carbon black), and the binder (styrene-butadiene rubber/carboxymethyl cellulose in a 5:5 ratio), respectively, and EC, EMC, DMC, FEC, VC, and PS denote ethylene carbonate, ethyl methyl carbonate, dimethyl carbonate, fluoroethylene carbonate, vinylene carbonate, and propanesultone, respectively.

**[Table 3]**

| | |
|---|---|
| Composition (AM:CM:BM) | 8:1:1 |
| Areal Capacity (mAh/cm² ) | 1 |
| Electrolyte | 1.3 M LiPF₆ EC/EMC/DMC 3:5:2, FEC 10%, LiBF₄ 0.2%, 0.5% VC, 1% PS |
| Cut-Off Voltage (V) | Formation: 0.005-1.5, Cycle Test: 0.005-1.2 |
| C-Rate (C) | Formation: 0.1-0.1, CV cut-off at 0.005 V with 0.01C |

**[Table 4]**

| Sample | Charge Capacity (mAh/g) | Discharge Capacity (mAh/g) | ICE (%) |
|---|---|---|---|
| Reference Example | 1,942 | 1,779 | 91.6 |
| Example 2 | 1,197 | 1,055 | 88.1 |
| Comparative Example 1 | 2,475 | 2,276 | 92.0 |

**[Table 5]**

| Sample | Discharge Capacity (mAh/g) | ICE (%) | Cycle Retention (%) |
|---|---|---|---|
| Reference Example | 1,779 | 91.6 | 74.7 (20 cycles) |
| Example 2 | 1,055 | 88.1 | 96.3 (50 cycles) |
| Comparative Example 1 | 2,276 | 92.0 | 76.5 (50 cycles) |

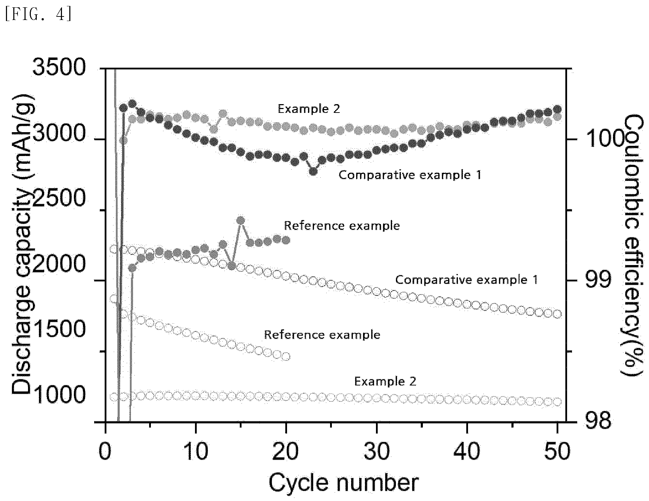

As confirmed from Tables 4 and 5 and FIGS. 3 and 4, in the case of the half coin cells manufactured from the composites of the Examples, the capacity decreased due to the reduced silicon content; however, the cycle retention was remarkably superior compared to that of the Reference Example and the Comparative Example.

## Claims

1. A carbon-silicon/carbon composite, comprising:
a porous carbon support; and
a silicon/carbon composite matrix disposed on the surface and inside the pores of the porous carbon support.

2. The carbon-silicon/carbon composite of claim 1, wherein the porous carbon support has a mesopore volume ratio of 10 to 80% based on the total pore volume, the mesopores having a pore size of 2 to 50 nm.

3. The carbon-silicon/carbon composite of claim 1, wherein the porous carbon support has a BET specific surface area of 300 to 3,000 m² /g, a tap density of 0.05 to 0.5 g/mL, and an average particle size of 1 to 20 µm.

4. The carbon-silicon/carbon composite of claim 1, wherein the silicon/carbon composite matrix contains silicon and carbon in a weight ratio of 1:2 to 1:0.1.

5. The carbon-silicon/carbon composite of claim 1, wherein the silicon/carbon composite matrix contains 10 to 90 wt% of the total weight of the carbon-silicon/carbon composite.

6. The carbon-silicon/carbon composite of claim 1, further comprising a carbon layer formed on the silicon/carbon composite matrix.

7. A method for producing a carbon-silicon/carbon composite, the method comprising:
(1) forming silicon on the surface and inside the pores of a porous carbon support to obtain a carbon-silicon composite; and
(2) heat-treating the carbon-silicon composite.

8. The method for producing a carbon-silicon/carbon composite of claim 7, wherein the heat-treating is performed by heat-treating the carbon-silicon composite at a temperature of 800 to 1,000° C to convert a portion of the Si-Si bonds of the silicon into Si-C bonds.

9. The method for producing a carbon-silicon/carbon composite of claim 7, wherein the heat-treating is performed by forming a carbon layer on the carbon-silicon composite at a temperature of 800 to 1,000° C while converting a portion of the Si-Si bonds of the silicon into Si-C bonds.

10. A negative electrode active material, comprising:
the carbon-silicon/carbon composite according to any one of claims 1 to 6; and
a carbon-based anode material.

11. An all-solid-state battery comprising a solid electrolyte interphase (SEI) film comprising the carbon-silicon/carbon composite according to any one of claims 1 to 6.
